# EUROPEAN PATENT APPLICATION

(11) **EP 4 365 040 A1**
(43) Date of publication of application: **08.05.2024**
(21) Application number: 23199690.1
(22) Date of filing: 26.09.2023
(51) Int. Cl.: B60T 7/22, B60T 8/17, B60T 8/26, B60T 8/32

(54) **STRADDLED VEHICLE**

(30) Priority: 01.11.2022 JP 2022175252
(71) Applicant: Yamaha Hatsudoki Kabushiki Kaisha, Iwata-shi, Shizuoka 438-8501 (JP)
(72) Inventor: NAKAMURA, Shota, Iwata-shi, 438-8501 (JP); KASAI, Satoshi, Iwata-shi, 438-8501 (JP); SUGITA, Kenji, Iwata-shi, 438-8501 (JP); MATSUHISA, Yasuhide, Iwata-shi, 438-8501 (JP)
(74) Representative: Studio Torta S.p.A.

(57) **Abstract**

There is disclosed a straddle vehicle that automatically actuates a brake, based on an inter-vehicle distance from a preceding vehicle, reduction in riding comfort due to brake actuation is suppressed; wherein a control device (60) of a motorcycle (1) includes a brake controller (62) that controls a front wheel brake (8B) and a rear wheel brake 9B, based on an inter-vehicle distance from a preceding vehicle detected by a radar (22); the control device (60) including a suspension controller (63) that, after actuation of the front wheel brake (8B) and/or the rear wheel brake 9B is started by the brake controller (62), performs at least one of increasing a damping force of a front fork (20) in a contraction direction, increasing a spring reaction force of the front fork (20), increasing a damping force of a rear suspension (30) in an expansion direction, and reducing a spring reaction force of the rear suspension (30).

## Description

### Technical field

The present invention relates to a straddled vehicle including a detection device that detects an inter-vehicle distance from a preceding vehicle and an electronically controlled suspension.

### Prior Art

Conventionally, straddled vehicles that include a radar device that detects an obstacle (including another vehicle) in front and automatically actuate a brake when a collision with the obstacle is likely to occur have been known. For example, Japanese Patent No. 6842568 describes such a straddled vehicle.

Japanese Patent No. 6842568 describes the following control. First, whether a collision of a motorcycle with an obstacle in front is likely to occur is detected. When a collision is likely to occur, whether a brake operation has been performed by a rider is determined. When a brake operation has not been performed by the rider, a warning is given to the rider by displaying the warning on a meter or the like. After a warning is given, characteristics of a front fork and a rear suspension are adjusted to increase a spring reaction force of the front fork, a damping force of the front fork in a contraction direction, and a damping force of the rear suspension in an expansion direction and reduce a spring reaction force of the rear suspension. Thereafter, a brake is actuated.

According to the above-described control, before the brake is actuated, an operation of the front fork in the contraction direction becomes stiff and an operation of the rear suspension in the expansion direction becomes stiff. Therefore, when the brake is actuated, change of a posture of a vehicle body to a front-down posture is suppressed, and pitching of the motorcycle is reduced.

Patent Document 1: Japanese Patent No. 6842568

Incidentally, straddled vehicles that perform control in which a distance (which will be hereinafter referred to as an inter-vehicle distance) from another vehicle (which will be hereinafter referred to as a preceding vehicle) traveling in front is detected by a radar device and automatically actuates a brake as appropriate when the preceding vehicle decelerates or the like to keep the inter-vehicle distance constant have been known. In straddled vehicles that perform the above-described control, it is also preferable to suppress pitching when a brake is actuated. Therefore, the control disclosed in Japanese Patent No. 6842568 can be applied to the straddled vehicle.

However, in the control disclosed in Japanese Patent No. 6842568, characteristics of a front fork and a rear suspension are changed before actuation of a brake. A motorcycle travels in a state where an operation of the front fork in a contraction direction and an operation of the rear suspension in an expansion direction are stiff immediately before the brake is actuated. Therefore, only in a short time before actuation of the brake, riding comfort is reduced in some cases. When it is an object to avoid a collision with an obstacle, reduction in riding comfort in a short time is not particularly a problem. However, in a straddled vehicle that travels while keeping an inter-vehicle distance constant, it is not preferable that riding comfort is reduced each time automatic braking is performed. It is desired to increase riding comfort when an automatic brake is actuated.

In view of the foregoing, the present invention has been devised and it is therefore an object of the present invention to suppress reduction in riding comfort due to braking in a straddled vehicle that automatically actuates a brake, based on an inter-vehicle distance from a preceding vehicle.

### Description of the invention

A straddled vehicle disclosed herein includes a vehicle body frame, a front wheel supported by the vehicle body frame, a rear wheel supported by the vehicle body frame, a front wheel brake that brakes the front wheel, a rear wheel brake that brakes the rear wheel, an electronically controlled front suspension connected to the vehicle body frame and the front wheel, an electronically controlled rear suspension connected to the vehicle body frame and the rear wheel, a preceding vehicle detection device that is supported by the vehicle body frame and detects an inter-vehicle distance from a preceding vehicle, and a control device connected to the front wheel brake, the rear wheel brake, the front suspension, the rear suspension, and the preceding vehicle detection device. The control device includes a brake controller and a suspension controller. The brake controller controls the front wheel brake and the rear wheel brake, based on at least the inter-vehicle distance detected by the preceding vehicle detection device. After actuation of the front wheel brake and/or the rear wheel brake is started by the brake controller, the suspension controller performs at least one of increasing a damping force of the front suspension in a contraction direction, increasing a spring reaction force of the front suspension, increasing a damping force of the rear suspension in an expansion direction, and reducing a spring reaction force of the rear suspension.

According to the straddled vehicle, the front wheel brake and/or the rear wheel brake are actuated based on the inter-vehicle distance detected by the preceding vehicle detection device. Thus, for example, the inter-vehicle distance from the preceding vehicle is kept constant. According to the straddled vehicle, after actuation of the front wheel brake and/or the rear wheel brake is started, at least one of increasing the damping force of the front suspension in the contraction direction, increasing the spring reaction force of the front suspension, increasing the damping force of the rear suspension in the expansion direction, and reducing the spring reaction force of the rear suspension is executed. Therefore, reduction in riding comfort before brake actuation can be suppressed and change of a posture of the vehicle body to a front-down posture after brake actuation can be suppressed. Accordingly, occurrence of pitching can be suppressed and reduction in riding comfort can be suppressed.

The suspension controller may be configured to, after actuation of the front wheel brake and/or the rear wheel brake by the brake controller is terminated, perform at least one of increasing a damping force of the front suspension in an expansion direction, reducing the spring reaction force of the front suspension, increasing a damping force of the rear suspension in a contraction direction, and increasing the spring reaction force of the rear suspension.

Thus, after actuation of the front wheel brake and/or the rear wheel brake, when the posture of the vehicle body returns from the front-down posture to an original posture, sudden change of the posture of the vehicle body can be suppressed. Accordingly, occurrence of pitching can be suppressed and reduction in riding comfort can be suppressed.

The straddled vehicle may further include a sensor that is connected to the control device and detects a vehicle speed and/or an acceleration of the straddled vehicle. The brake controller may be configured to actuate the front wheel brake and/or the rear wheel brake, based on the inter-vehicle distance detected by the preceding vehicle detection device and a detection value of the sensor.

Thus, the front wheel brake and/or the rear wheel brake can be preferably controlled.

The suspension controller may be configured to, after actuation of the front wheel brake and/or the rear wheel brake is started by the brake controller, cause the damping force of the front suspension in the contraction direction to increase as a braking force of the front wheel brake and/or the rear wheel brake increases.

Thus, the damping force of the front suspension in the contraction direction is controlled in accordance with a magnitude of the braking force of the front wheel brake and/or the rear wheel brake, so that change of the posture of the vehicle body to the front-down posture after brake actuation can be favorably suppressed. Accordingly, occurrence of pitching can be effectively suppressed and reduction in riding comfort can be suppressed.

The control device may include a storage that stores a map defining a relationship between the braking force of the front wheel brake and/or the rear wheel brake and the damping force of the front suspension in the contraction direction. The suspension controller may be configured to control the damping force of the front suspension in the contraction direction, based on the map.

Thus, in adjusting the damping force of the front suspension in the contraction direction, a load of and a time required for a calculation of the control device can be reduced. After brake actuation, the damping force of the front suspension can be adjusted in a short time.

The suspension controller may be configured to, after actuation of the front wheel brake and/or the rear wheel brake is started by the brake controller, cause the damping force of the rear suspension in the expansion direction to increase as the braking force of the front wheel brake and/or the rear wheel brake increases.

Thus, the damping force of the rear suspension in the expansion direction is suppressed in accordance with the magnitude of the braking force of the front wheel brake and/or the rear wheel brake, so that change of the posture of the vehicle body to the front-down posture after brake actuation can be favorably suppressed. Accordingly, occurrence of pitching can be effectively suppressed and reduction in riding comfort can be suppressed.

The control device may include a storage that stores a map defining a relationship between the braking force of the front wheel brake and/or the rear wheel brake and the damping force of the rear suspension in the expansion direction. The suspension controller may be configured to control the damping force of the rear suspension in the expansion direction, based on the map.

Thus, in adjusting the damping force of the rear suspension in the expansion direction, a load of and a time required for a calculation of the control device can be reduced. After brake actuation, the damping force of the rear suspension can be adjusted in a short time.

The suspension controller may be configured to, after actuation of the front wheel brake and/or the rear wheel brake is started by the brake controller, cause the spring reaction force of the front suspension to increase and/or the spring reaction force of the rear suspension to reduce as the braking force of the front wheel brake and/or the rear wheel brake increases.

Thus, the spring reaction force of the front suspension and/or the rear suspension is controlled in accordance with the magnitude of the braking force of the front wheel brake and/or the rear wheel brake, so that change of the posture of the vehicle body to the front-down posture after brake actuation can be favorably suppressed. Accordingly, occurrence of pitching can be effectively suppressed and reduction in riding comfort can be suppressed.

According to the present invention, in a straddled vehicle that automatically actuates a brake, based on an inter-vehicle distance from a preceding vehicle, reduction in riding comfort due to brake actuation can be suppressed.

### Brief description of the drawings

FIG. 1 is a side view of a motorcycle according to an embodiment.
FIG. 2 is a diagram illustrating a configuration of a control system of a motorcycle.
FIG. 3 is a diagram illustrating a configuration of a front fork.
FIG. 4 is a diagram illustrating a configuration of a rear suspension.
FIG. 5 is a functional block diagram of a control device.
FIG. 6 is a flowchart of an example of control performed by a motorcycle.

### Embodiments of the invention

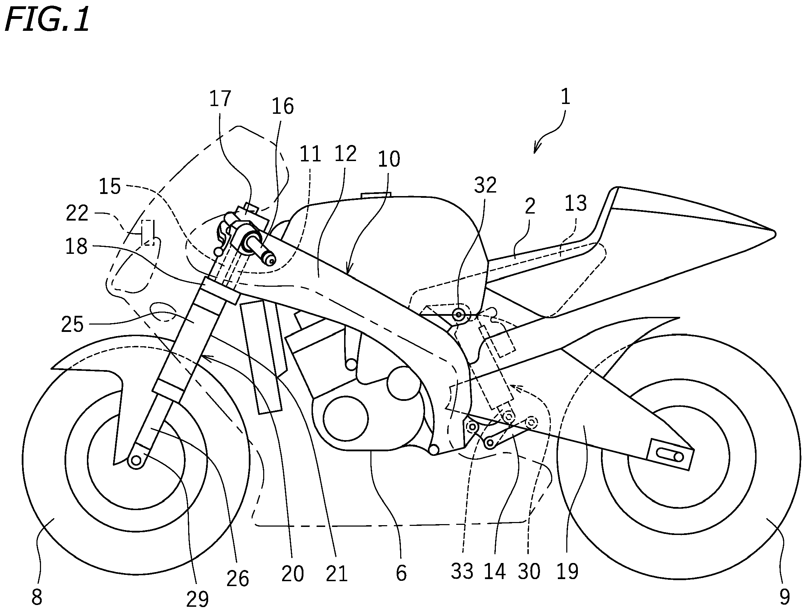

With reference to the attached drawings, one embodiment of a straddled vehicle will be described below. As illustrated in FIG. 1, a straddled vehicle according to this embodiment is a motorcycle 1.

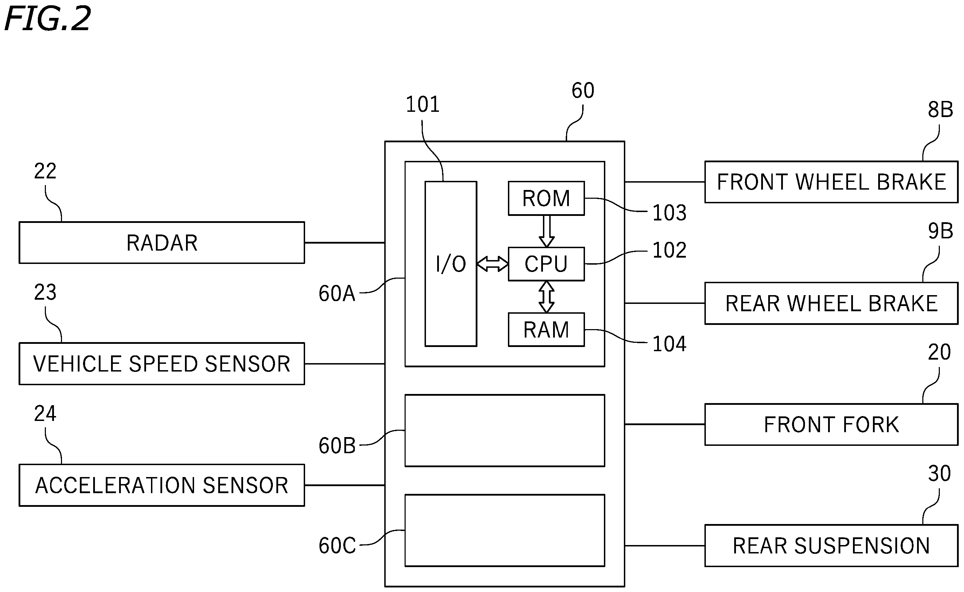

As illustrated in FIG. 1, the motorcycle 1 includes a vehicle body frame 10, a seat 2 supported by the vehicle body frame 10, an internal combustion engine (which will be hereinafter referred to as an engine) 6 supported by the vehicle body frame 10, a front wheel 8 and a rear wheel 9 supported by the vehicle body frame 10, an electronically controlled front fork 20 connected to the vehicle body frame 10 and the front wheel 8, an electronically controlled rear suspension 30 connected to the vehicle body frame 10 and the rear wheel 9, and a radar 22. As illustrated in FIG. 2, the motorcycle 1 includes a vehicle speed sensor 23 that detects a speed of the motorcycle 1, an acceleration sensor 24 that detects an acceleration of the motorcycle 1, a front wheel brake 8B that brakes the front wheel 8, a rear wheel brake 9B that brakes the rear wheel 9, and a control device 60. The control device 60 is communicably connected to the radar 22, the vehicle speed sensor 23, the acceleration sensor 24, the front wheel brake 8B, the rear wheel brake 9B, the front fork 20, and the rear suspension 30.

As illustrated in FIG. 1, the vehicle body frame 10 includes a head pipe 11, a main frame 12 extending rearward from the head pipe 11, and a seat frame 13 extending rearward from the main frame 12. The seat 2 is supported by the seat frame 13.

A steering shaft 15 is rotatably inserted in the head pipe 11. A handlebar 16 is mounted on an upper end portion of the steering shaft 15. An upper bracket 17 is fixed to the upper end portion of the steering shaft 15. An under bracket 18 is fixed to a lower end portion of the steering shaft 15.

The engine 6 is an example of a traveling drive device. However, the drive device is not limited to the engine 6. The drive device may include an electric motor. The drive device may include both of an internal combustion engine and an electric motor.

The front wheel 8 is supported by the head pipe 11 of the vehicle body frame 10 via the front fork 20. The rear wheel 9 is supported by the main frame 12 of the vehicle body frame 10 via a rear arm 19. A front end portion of the rear arm 19 is rotatably connected to the main frame 12 via an unillustrated pivot shaft. A rear end portion of the rear arm 19 is connected to the rear wheel 9. The rear wheel 9 is connected to the engine 6 via a power transmission member (not illustrated), such as a chain of the like. The rear wheel 9 is a drive wheel and receives a driving force of the engine 6 to rotate.

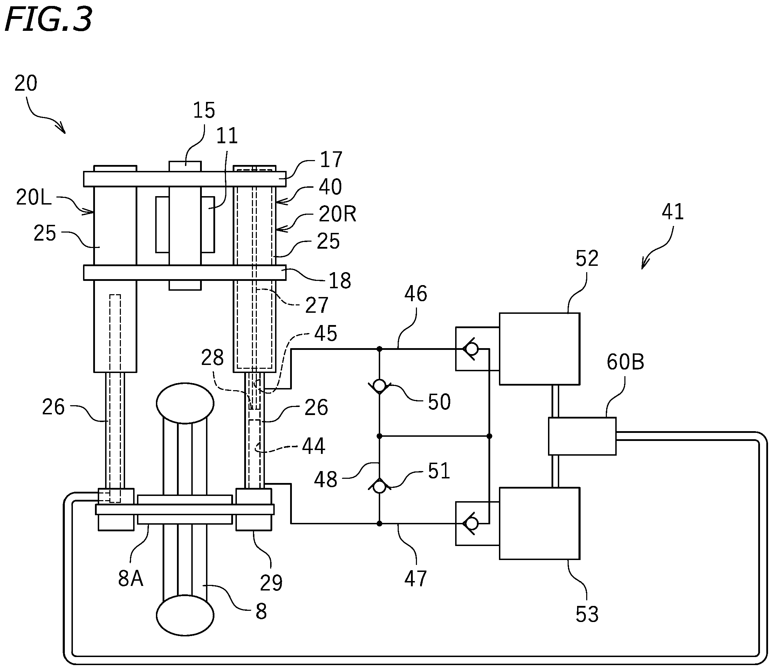

The front fork 20 is an example of an electronic controlled suspension. Note that the electronic controlled suspension is a suspension in which at least a damping force characteristic is adjusted by electronic control. Herein, the front fork 20 is configured such that both a damping force characteristic and a spring characteristic are adjustable by electronic control. As illustrated in FIG. 3, the front fork 20 is fixed to the upper bracket 17 and the under bracket 18. The front fork 20 includes a left tube 20L and a right tube 20R.

Each of the left tube 20L and the right tube 20R includes an outer tube 25 and an inner tube 26. The outer tube 25 is mounted to the upper bracket 17 and the under bracket 18. A lower end portion of the inner tube 26 is joined to an axle 8A of the front wheel 8 via an axle bracket 29. The inner tube 26 is slidably inserted inside the outer tube 25. The inner tube 26 slides against the outer tube 25, so that the front fork 20 expands and contracts. In this embodiment, when the inner tube 26 moves downward with respect to the outer tube 25, the front fork 20 expands. When the inner tube 26 moves upward with respect to the outer tube 25, the front fork 20 contracts. Downward and upward correspond to an expansion direction and a contraction direction of the front fork 20, respectively.

Although not illustrated, a fork spring is arranged inside each of the right tube 20R and the left tube 20L. The fork spring is an example of a spring of the front fork 20.

The right tube 20R includes an oil-type shock absorber 40 that is electronically controlled. The shock absorber 40 includes the inner tube 26, a rod 27, a piston 28, and a control valve assembly 41. The rod 27 is undisplaceably fixed to the outer tube 25. The piston 28 is connected to a lower end portion of the rod 27. The piston 28 is arranged inside the inner tube 26. An inner space of the inner tube 26 is partitioned into an oil chamber 44 and an oil chamber 45 by the piston 28.

The control valve assembly 41 is connected to the oil chamber 44 and the oil chamber 45. The control valve assembly 41 includes oil paths 46 to 48, check valves 50 and 51, and electronically controlled piston valves 52 and 53. The check valve 50 is arranged between the oil path 46 and the oil path 48. The check valve 50 allows a flow of oil from the oil path 48 to the oil path 46 and prohibits a flow of oil from the oil path 46 to the oil path 48. The check valve 51 is arranged between the oil path 47 and the oil path 48. The check valve 51 allows a flow of oil from the oil path 48 to the oil path 47 and prohibits a flow of oil from the oil path 47 to the oil path 48. The piston valve 52 connects the oil path 46 and the oil path 48. The piston valve 52 allows a flow of oil from the oil path 46 to the oil path 48 and prohibits a flow of oil from the oil path 48 to the oil path 46. The piston valve 53 connects the oil path 47 and the oil path 48. The piston valve 53 allows a flow of oil from the oil path 47 to the oil path 48 and prohibits a flow of oil from the oil path 48 to the oil path 47. Each of the piston valves 52 and 53 is constituted of, for example, a solenoid valve.

When oil flows through the piston valve 52, the oil receives a flow resistance. Degree of the flow resistance caused by the piston valve 52 is controlled by the control device 60 (specifically, a control unit 60B that will be described later). When the control device 60 increases the flow resistance of the piston valve 52, the oil receives more resistance as the oil flows from the oil path 46 to the oil path 48. Thus, the oil is difficult to flow from the oil chamber 45 to the oil chamber 44 through the control valve assembly 41, so that a damping force of the front fork 20 in the expansion direction is increased. Conversely, when the control device 60 reduces the flow resistance of the piston valve 52, the damping force of the front fork 20 in the expansion direction is reduced.

When the oil flows through the piston valve 53, the oil receives a flow resistance. Degree of the flow resistance caused by the piston valve 53 is controlled by the control device 60. When the control device 60 increases the flow resistance of the piston valve 53, the oil receives more resistance as the oil flows from the oil path 47 to the oil path 48. Thus, the oil is difficult to flow from the oil chamber 44 to the oil chamber 45 through the control valve assembly 41, so that a damping force of the front fork 20 in the contraction direction is increased. Conversely, when the control device 60 reduces the flow resistance of the piston valve 53, the damping force of the front fork 20 in the contraction direction is reduced.

As illustrated in FIG. 1, an upper end portion 32 of the rear suspension 30 is fixed to the main frame 12 via a bracket. A lower end portion 33 of the rear suspension 30 is connected to a joining member 14 fixed to the rear arm 19. The rear suspension 30 is indirectly connected to the vehicle body frame 10 and the rear wheel 9.

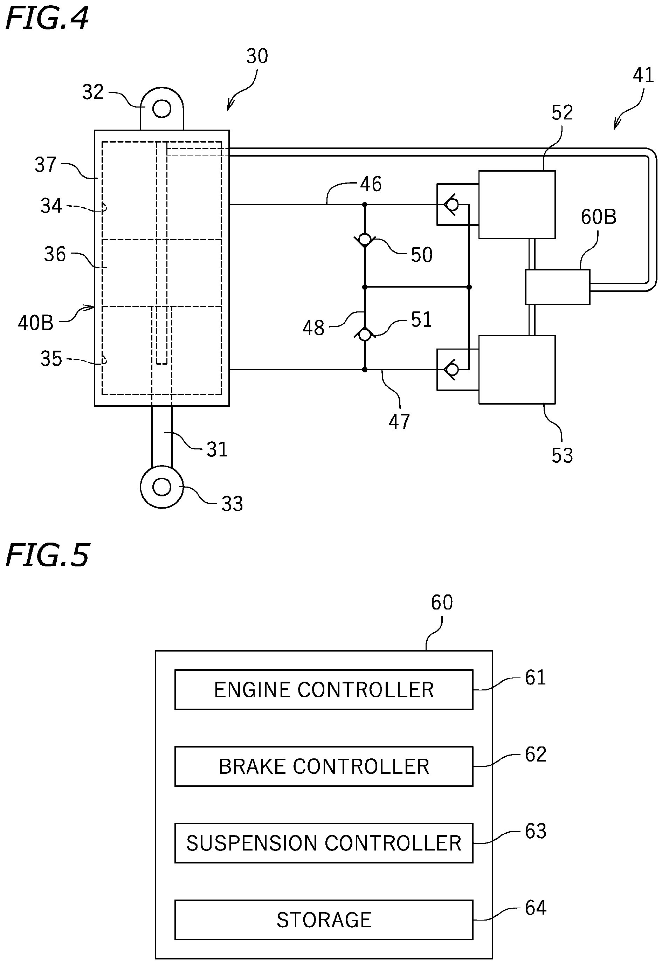

The rear suspension 30 is another example of the electronically controlled suspension. Herein, the rear suspension 30 is configured such that a damping force characteristic and a spring characteristic can be adjusted by electronic control. The rear suspension 30 includes an unillustrated spring. Moreover, as illustrated in FIG. 4, the rear suspension 30 includes an oil-type shock absorber 40B that is electronically controlled. The shock absorber 40B includes a cylinder 37, a piston 36 slidably arranged inside the cylinder 37, and a rod 31 extending from the piston 36. An internal space of the cylinder 37 is partitioned into an oil chamber 34 and an oil chamber 35 by the piston 36. When the piston 36 moves downward, the rear suspension 30 expands. When the piston 36 moves upward, the rear suspension 30 contracts. Downward and upward correspond to an expansion direction and a contraction direction of the rear suspension 30, respectively.

The rear suspension 30 includes a control valve assembly 41 that is similar to the control valve assembly 41 of the front fork 20. Each member that is similar to a corresponding member of the control valve assembly 41 of the front fork 20 will be denoted below by the same reference character as that of the corresponding member of the control valve assembly 41 and description thereof will be omitted. In the rear suspension 30, the oil path 46 of the control valve assembly 41 is connected to the oil chamber 34. The oil path 47 of the control valve assembly 41 is connected to the oil chamber 35.

When the control device 60 (specifically, the control unit 60B that will be described later) increases the flow resistance of the piston valve 52, the oil is difficult to flow from the oil chamber 34 to the oil chamber 35 through the control valve assembly 41, so that a damping force of the rear suspension 30 in the contraction direction is increased. Conversely, when the control device 60 reduces the flow resistance of the piston valve 52, the damping force of the rear suspension 30 in the contraction direction is reduced.

When the control device 60 increases the flow resistance of the piston valve 53, the oil is difficult to flow from the oil chamber 35 to the oil chamber 34 through the control valve assembly 41, so that a damping force of the rear suspension 30 in the expansion direction is increased. Conversely, when the control device 60 reduces the flow resistance of the piston valve 53, the damping force of the rear suspension 30 in the expansion direction is reduced.

The radar 22 (see FIG. 1) is an example of a preceding vehicle detection device that detects an inter-vehicle distance from a preceding vehicle (that is, another vehicle that travels in front of the motorcycle 1). The radar 22 transmits electromagnetic waves, such as millimeter waves or the like, toward front of the vehicle and receives their reflected waves. The radar 22 is supported by the vehicle body frame 10 and is installed in a front portion of the motorcycle 1. Note that, as the preceding vehicle detection device, a device that detects an inter-vehicle distance from a preceding vehicle is sufficient, and the preceding vehicle detection device is not limited to the radar 22. The preceding vehicle detection device may be constituted of a laser, a camera, or the like.

The control device 60 is constituted of one or two or more microcomputers. In this embodiment, as illustrated in FIG. 2, the control device 60 includes a plurality of control units. Specifically, the control device 60 includes a control unit 60A that performs control of the engine 6, a control unit 60B that performs control of the front fork 20 and the rear suspension 30, and a control unit 60C that performs control of the front wheel brake 8B and the rear wheel brake 9B. The control unit 60A includes an interface 101, a CPU 102, a ROM 103, a RAM 104, or the like. Although not illustrated, each of the control units 60B and 60C also includes an interface 101, a CPU 102, a ROM 103, a RAM 104, or the like. The control units 60A, 60B, and 60C are formed as separate bodies and are arranged in places apart from each other. The control units 60A, 60B, and 60C are communicably connected to each other. However, there is no limitation on a configuration of the control device 60. The control device 60 may be constituted of a single control unit.

As described above, the motorcycle 1 includes the vehicle speed sensor 23 that detects the speed of the motorcycle 1 and the acceleration sensor 24 that detects the acceleration of the motorcycle 1. The acceleration sensor 24 is constituted of, for example, an inertia measurement unit (IMU).

FIG. 5 is a functional block diagram of the control device 60. The CPU 102 of the control device 60 (see FIG. 2) executes computer programs stored in the ROM 103 or the like to function as an engine controller 61 that controls the engine 6, a brake controller 62 that controls the front wheel brake 8B and the rear wheel brake 9B, and a suspension controller 63 that controls the front fork 20 and the rear suspension 30. The ROM 103 or the RAM 104 of the control device 60 functions as a storage 64 that stores a map that will be described later. Note that the control device 60 may include, as the storage 64, some other memory than the ROM 103 and the RAM 104.

In this embodiment, the control device 60 can execute control (which will be hereinafter referred to as an adaptive cruise control) in which, when there is no preceding vehicle or when a speed of a preceding vehicle is higher than a preset speed (which will be hereinafter referred to as a set speed), the motorcycle 1 is caused to travel at a set speed and, when the speed of the preceding vehicle is lower than the set speed, the motorcycle 1 is caused to travel behind the preceding vehicle while keeping a preset inter-vehicle distance (which will be hereinafter referred to as a set distance) from the preceding vehicle. Note that the set distance may be a predetermined distance or may be a predetermined distance range. The set distance may vary in accordance with the speed of the motorcycle 1. For example, when the speed of the motorcycle 1 is relatively high, the set distance may be a relatively long distance, and when the speed of the motorcycle 1 is relatively low, the set distance may be a relatively short distance.

Although not illustrated, each of the front wheel brake 8B and the rear wheel brake 9B includes a hydraulic brake caliper. The brake controller 62 controls a hydraulic pressure of the brake caliper to control on and off and a braking force of each of the front wheel brake 8B and the rear wheel brake 9B. During the adaptive cruise control, the brake controller 62 controls the front wheel brake 8B and the rear wheel brake 9B, based on at least the inter-vehicle distance detected by the radar 22. In this embodiment, the brake controller 62 actuates the front wheel brake 8B and/or the rear wheel brake 9B, based on the inter-vehicle distance detected by the radar 22, the speed of the motorcycle 1 detected by the vehicle speed sensor 23, and the acceleration of the motorcycle 1 detected by the acceleration sensor 24. During the adaptive cruise control, when the inter-vehicle distance is smaller than the set distance, the engine controller 61 of the control device 60 reduces an output of the engine 6, and furthermore, the brake controller 62 actuates the front wheel brake 8B and/or the rear wheel brake 9B, as necessary. Thus, the motorcycle 1 decelerates and the inter-vehicle distance is increased. When the inter-vehicle distance has become equal to or larger than the set distance due to actuation of the front wheel brake 8B and/or the rear wheel brake 9B, the brake controller 62 terminates actuation of the front wheel brake 8B and/or the rear wheel brake 9B.

The suspension controller 63 controls the damping force of the front fork 20, a spring reaction force of the front fork 20, the damping force of the rear suspension 30, and a spring reaction force of the rear suspension 30. When the damping force of the front fork 20 in the contraction direction is increased, a contraction operation of the front fork 20 becomes stiff. When the damping force of the rear suspension 30 in the expansion direction is increased, an expansion operation of the rear suspension 30 becomes stiff. The spring reaction force of the front fork 20 is a reaction force to a force of the front fork 20 in the contraction direction. When the spring reaction force of the front fork 20 is increased, the contraction operation of the front fork 20 becomes stiff. The spring reaction force of the rear suspension 30 is a reaction force to a force of the rear suspension 30 in the contraction direction. When the spring reaction force of the rear suspension 30 is reduced, the expansion operation of the rear suspension 30 becomes stiff.

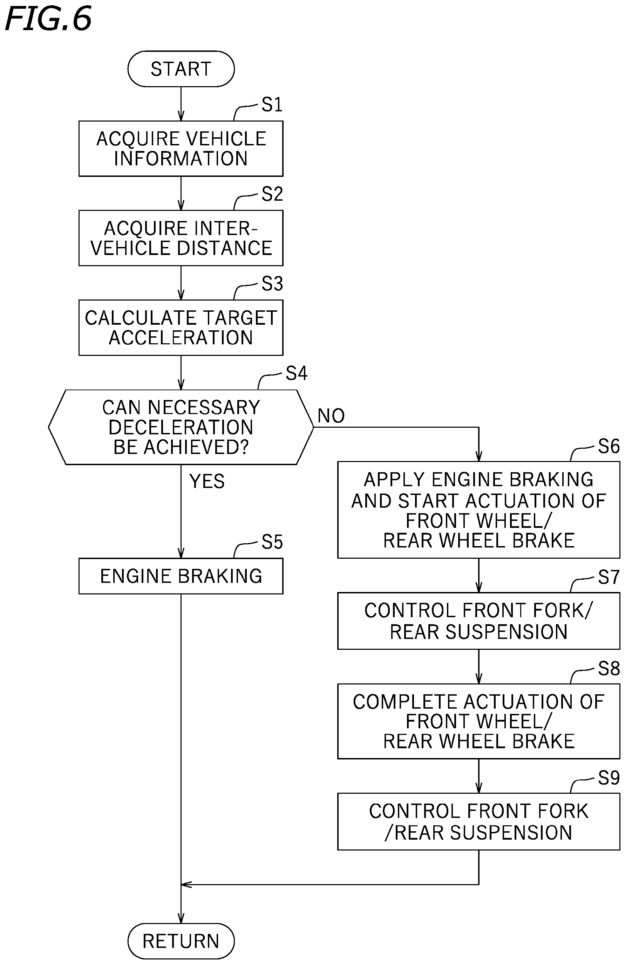

Next, with reference to a flowchart of FIG. 6, an example of control performed by the motorcycle 1 will be described. Control described below is performed during the adaptive cruise control.

First, in Step S1, vehicle information is acquired. Herein, the vehicle information is driving information of the motorcycle 1 as an own vehicle and driving information of a preceding vehicle. Specifically, in Step S1, the speed and the acceleration of the motorcycle 1 and a speed and an acceleration of a preceding vehicle are acquired. Note that the speed and the acceleration of the preceding vehicle can be calculated based on the driving information of the motorcycle 1 and a detection value of the radar 22. In Step S2, an inter-vehicle distance from the preceding vehicle is acquired.

In Step S3, a target acceleration necessary for keeping the inter-vehicle distance from the preceding vehicle at the set distance as the motorcycle 1 travels at speed equal to or lower than the set distance is calculated. In the following, negatively accelerating will be referred to as decelerating and a negative acceleration will be referred to as a deceleration. For example, when the preceding vehicle suddenly decelerates, the target acceleration is a relatively large negative value.

When the target acceleration is a negative value, the engine controller 61 of the control device 60 reduces the output of the engine 6. Thus, so-called engine braking occurs in the motorcycle 1. In Step S4, whether the negative target acceleration can be achieved only by engine braking is determined. In other words, whether a necessary deceleration can be achieved only by deceleration by engine braking is determined.

When a determination result of Step S4 is YES, the process proceeds to Step S5, the engine controller 61 reduces the output of the engine 6, and the brake controller 62 does not actuate the front wheel brake 8B and the rear wheel brake 9B. The motorcycle 1 decelerates only by engine braking and the inter-vehicle distance from the preceding vehicle is kept at the set distance.

When the determination result of Step S4 is NO, the process proceeds to Step S6, the engine controller 61 reduces the output of the engine 6, and the brake controller 62 starts actuation of the front wheel brake 8B and/or the rear wheel brake 9B. In the following, actuation of at least one of the front wheel brake 8B and the rear wheel brake 9B is also referred to simply as "brake actuation."

At brake actuation, the deceleration of the motorcycle 1 is relatively large. With the deceleration of the motorcycle 1 kept relatively large, a posture of a vehicle body changes to a front-down posture and pitching is likely to occur. In this embodiment, when actuation of the front wheel brake 8B and/or the rear wheel brake 9B is started by the brake controller 62, then, the process proceeds to Step S7 and the suspension controller 63 controls the front fork 20 and/or the rear suspension 30. Specifically, after actuation of the front wheel brake 8B and/or the rear wheel brake 9B is started, the suspension controller 63 performs at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30. Thus, change of the posture of the vehicle body to the front-down posture after brake actuation is started is suppressed, and pitching is suppressed.

Herein, after actuation of the front wheel brake 8B and/or the rear wheel brake 9B is started, the suspension controller 63 increases the damping force of the front fork 20 in the contraction direction and the damping force of the rear suspension 30 in the expansion direction. The storage 64 of the control device 60 stores a map defining a relationship between the braking force of the front wheel brake 8B and/or the rear wheel brake 9B and each of the damping force of the front fork 20 in the contraction direction and the damping force of the rear suspension 30 in the expansion direction. The map is set such that, as the braking force of the front wheel brake 8B and/or the rear wheel brake 9B increases, the damping force of the front fork 20 in the contraction direction and the damping force of the rear suspension 30 in the expansion direction increase. The suspension controller 63 controls the damping forces of the front fork 20 and the rear suspension 30, based on the map. The suspension controller 63 causes the damping force of the front fork 20 in the contraction direction and the damping force of the rear suspension 30 in the expansion direction to increase as the braking force of the front wheel brake 8B and/or the rear wheel brake 9B increases, based on the map. Thus, the damping force of the front fork 20 in the contraction direction and the damping force of the rear suspension 30 in the expansion force are controlled in accordance with the braking force of the front wheel brake 8B and/or the rear wheel brake 9B. Therefore, pitching can be preferably suppressed.

Thereafter, after a predetermined deceleration is achieved by braking of the front wheel brake 8B and/or the rear wheel brake 9B, in Step S8, the brake controller 62 terminates actuation of the front wheel brake 8B and/or the rear wheel brake 9B.

When brake actuation is terminated, depending on the driving state of the motorcycle 1, the posture of the vehicle body changes to a front-up posture and pitching is likely to occur. In this embodiment, when actuation of the front wheel brake 8B and/or the rear wheel brake 9B by the brake controller 62 is terminated, the process proceeds to Step S9 and the suspension controller 63 controls the front fork 20 and/or the rear suspension 30. Specifically, after actuation of the front wheel brake 8B and/or the rear suspension 30 is terminated, the suspension controller 63 performs at least one of increasing the damping force of the front fork 20 in the expansion direction, reducing the spring force of the front fork 20, increasing the damping force of the rear suspension 30 in the contraction direction, and increasing the spring reaction force of the rear suspension 30. Herein, after actuation of the front wheel brake 8B and/or the rear wheel brake 9B is terminated, the suspension controller 63 increases the damping force of the front fork 20 in the expansion direction and the damping force of the rear suspension 30 in the contraction direction. Thus, change of the posture of the vehicle body to the front-up posture after brake actuation is terminated is suppressed and pitching is suppressed.

As described above, according to the motorcycle 1 of this embodiment, the front wheel brake 8B and/or the rear wheel brake 9B is actuated based on the inter-vehicle distance detected by the radar 22. Thus, the inter-vehicle distance from the preceding vehicle can be kept constant. According to the motorcycle 1 of this embodiment, after actuation of the front wheel brake 8B and/or the rear wheel brake 9B is started, at least one of increasing the damping force of the front fork 20 in the contraction direction, increasing the spring reaction force of the front fork 20, increasing the damping force of the rear suspension 30 in the expansion direction, and reducing the spring reaction force of the rear suspension 30 is executed. Thus, the contraction operation of the front fork 20 and the expansion operation of the rear suspension 30 become stiff and it can be suppressed that the posture of the vehicle body changes to the front-down posture after brake actuation. Accordingly, occurrence of pitching can be suppressed. Moreover, change of the damping forces or the spring reaction forces of the front fork 20 and the rear suspension 30 before brake actuation can be avoided, so that reduction in riding comfort before brake actuation can be suppressed. Therefore, according to the motorcycle 1 of this embodiment, reduction in riding comfort due to brake actuation can be suppressed.

According to this embodiment, the suspension controller 63 is configured to cause, after actuation of the front wheel brake 8B and/or the rear wheel brake 9B is started, the damping force of the front fork 20 in the contraction direction and the damping force of the rear suspension 30 in the expansion direction to increase as the braking force of the front wheel brake 8B and/or the rear wheel brake 9B increases. According to this embodiment, the damping force of the front fork 20 in the contraction direction and the damping force of the rear suspension 30 in the expansion direction are controlled in accordance with a magnitude of the braking force of the front wheel brake 8B and/or the rear wheel brake 9B, so that change of the posture of the vehicle body to the front-down posture after brake actuation can be favorably suppressed. Accordingly, occurrence of pitching can be effectively suppressed and reduction in riding comfort can be suppressed.

According to this embodiment, the suspension controller 63 controls the damping forces of the front fork 20 and the rear suspension 30, based on the map stored in the storage 64. Therefore, a load of and a time required for a calculation of the control device 60 can be reduced. After brake actuation, the damping forces of the front fork 20 and the rear suspension 30 can be adjusted in a short time.

In this embodiment, the above-described control by the suspension controller 63 is executed during the adaptive cruise control. In the motorcycle 1 configured such that a brake is automatically actuated to keep the inter-vehicle distance constant, it is not preferable that riding comfort is reduced each time the brake is automatically actuated. Thus, the above-described control of the suspension controller 63 is useful particularly during the adaptive cruise control in which the inter-vehicle distance from the preceding vehicle is kept constant. However, although there is no particular limitation on the above-described control by the suspension controller 63, the control may be executed when some other control than the adaptive cruise control is performed.

According to the motorcycle 1 of this embodiment, after actuation of the front wheel brake 8B and/or the rear wheel brake 9B is terminated, at least one of increasing the damping force of the front fork 20 in the expansion direction, reducing the spring reaction force of the front fork 20, increasing the damping force of the rear suspension 30 in the contraction direction, and increasing the spring reaction force of the rear suspension 30 is performed. Therefore, in a case where the posture of the vehicle body has changed to the front-down posture after brake actuation, when the posture returns from the front-down posture to an original posture, sudden change of the posture of the vehicle body can be suppressed. Accordingly, occurrence of pitching can be suppressed, and reduction in riding comfort can be further suppressed.

The brake controller 62 of the control device 60 is configured to actuate the front wheel brake 8B and/or the rear wheel brake 9B, based on the inter-vehicle distance detected by the radar 22, the speed of the motorcycle 1 detected by the vehicle speed sensor 23, and the acceleration of the motorcycle 1 detected by the acceleration sensor 24. Thus, the front wheel brake 8B and/or the rear wheel brake 9B can be preferably controlled. Accordingly, the adaptive cruise control can be favorably executed.

One embodiment of the straddled vehicle has been described above, but the above-described embodiment is merely an example. Various other embodiments are also possible.

The above-described control by the suspension controller 63 is merely an example. In Step S6 described above, the suspension controller 63 may be configured to perform control of the spring reaction force of the front fork 20 and/or the rear suspension 30, instead of or together with control of the damping forces of the front fork 20 and the rear suspension 30. The storage 64 may be configured to store a map defining a relationship between the braking force of the front wheel brake 8B and/or the rear wheel brake 9B and each of the spring reaction force of the front fork 20 and the spring reaction force of the rear suspension 30. The above-described map may be set such that, as the braking force of the front wheel brake 8B and/or the rear wheel brake 9B increases, the spring reaction force of the front fork 20 increases and the spring reaction force of the rear suspension 30 reduces.

In the above-described embodiment, in Step S6, the suspension controller 63 increases both the damping force of the front fork 20 in the contraction direction and the damping force of the rear suspension 30 in the expansion direction, but the suspension controller 63 may be configured to increase only one of the damping force of the front fork 20 in the contraction direction and the damping force of the rear suspension 30 in the expansion direction.

In the above-described embodiment, Step S9 may be omitted.

The front fork 20 is an example of an electronically controlled front suspension, but the front suspension is not limited to the front fork 20. The front suspension is not limited to a front suspension including a telescopic type mechanism, but may be a front suspension including a telelever type mechanism.

The straddled vehicle is a vehicle that a rider straddles to ride. The straddled vehicle is not limited to the motorcycle 1. The straddled vehicle may be, for example, a motor tricycle, an all-terrain vehicle (ATV), a snowmobile, or the like.

The terms and expressions used herein are for description only and are not to be interpreted in a limited sense. These terms and expressions should be recognized as not excluding any equivalents to the elements shown and described herein and as allowing any modification encompassed in the scope of the claims. The present invention may be embodied in many various forms. This disclosure should be regarded as providing preferred embodiments of the principle of the present invention. These preferred embodiments are provided with the understanding that they are not intended to limit the present invention to the preferred embodiments described in the specification and/or shown in the drawings. The present invention is not limited to the preferred embodiment described herein. The present invention encompasses any of preferred embodiments including equivalent elements, modifications, deletions, combinations, improvements and/or alterations which can be recognized by a person of ordinary skill in the art based on the disclosure. The elements of each claim should be interpreted broadly based on the terms used in the claim, and should not be limited to any of the preferred embodiments described in this specification or used during the prosecution of the present application.

### Reference sign list

1 motorcycle (straddled vehicle), 8 front wheel, 8B front wheel brake, 9 rear wheel, 9B rear wheel brake, 10 vehicle body frame, 20 front fork (front suspension), 22 radar (preceding vehicle detection device), 23 vehicle speed sensor, 24 acceleration sensor, 30 rear suspension, 60 control device, 62 brake controller, 63 suspension controller, 64 storage

## Claims

1. A straddled vehicle (1) comprising:
a vehicle body frame (10);
a front wheel (8) supported by the vehicle body frame (10);
a rear wheel (9) supported by the vehicle body frame (10);
a front wheel brake (8B) that brakes the front wheel (8);
a rear wheel brake (9B) that brakes the rear wheel (9);
an electronically controlled front suspension (20) connected to the vehicle body frame (10) and the front wheel (8);
an electronically controlled rear suspension (30) connected to the vehicle body frame (10) and the rear wheel (9);
a preceding vehicle detection device (22) that is supported by the vehicle body frame (10) and detects an inter-vehicle distance from a preceding vehicle; and
a control device (60) connected to the front wheel brake (8B), the rear wheel brake (9B), the front suspension (20), the rear suspension (30), and the preceding vehicle detection device (22),
wherein
the control device (60) includes
a brake controller (62) that controls the front wheel brake (8B) and the rear wheel brake (9B), based on at least the inter-vehicle distance detected by the preceding vehicle detection device (22), and
a suspension controller (63) that, after actuation of the front wheel brake (8B) and/or the rear wheel brake (9B) is started by the brake controller (62), performs at least one of increasing a damping force of the front suspension (20) in a contraction direction, increasing a spring reaction force of the front suspension (20), increasing a damping force of the rear suspension (30) in an expansion direction, and reducing a spring reaction force of the rear suspension (30).

2. The straddled vehicle (1) according to claim 1,
wherein
the suspension controller (63) is configured to, after actuation of the front wheel brake (8B) and/or the rear wheel brake (9B) by the brake controller (62) is terminated, perform at least one of increasing a damping force of the front suspension (20) in an expansion direction, reducing the spring reaction force of the front suspension (20), increasing a damping force of the rear suspension (30) in a contraction direction, and increasing the spring reaction force of the rear suspension (30).

3. The straddled vehicle (1) according to claim 1 or 2, further comprising:
a sensor (23, 24) that is connected to the control device (60) and detects a vehicle speed and/or an acceleration of the straddled vehicle (1),
wherein
the brake controller (62) is configured to actuate the front wheel brake (8B) and/or the rear wheel brake (9B), based on the inter-vehicle distance detected by the preceding vehicle detection device (22) and a detection value of the sensor (23, 24).

4. The straddled vehicle (1) according to any one of claims 1 to 3,
wherein
the suspension controller (63) is configured to, after actuation of the front wheel brake (8B) and/or the rear wheel brake (9B) is started by the brake controller (62), cause the damping force of the front suspension (20) in the contraction direction to increase as a braking force of the front wheel brake (8B) and/or the rear wheel brake (9B) increases.

5. The straddled vehicle (1) according to claim 4,
wherein
the control device (60) includes a storage (64) that stores a map defining a relationship between the braking force of the front wheel brake (8B) and/or the rear wheel brake (9B) and the damping force of the front suspension (20) in the contraction direction, and
the suspension controller (63) is configured to control the damping force of the front suspension (20) in the contraction direction, based on the map.

6. The straddled vehicle (1) according to any one of claims 1 to 5,
wherein
the suspension controller (63) is configured to, after actuation of the front wheel brake (8B) and/or the rear wheel brake (9B) is started by the brake controller (62), cause the damping force of the rear suspension (30) in the expansion direction to increase as the braking force of the front wheel brake (8B) and/or the rear wheel brake (9B) increases.

7. The straddled vehicle (1) according to claim 6,
wherein
the control device (60) includes a storage (64) that stores a map defining a relationship between the braking force of the front wheel brake (8B) and/or the rear wheel brake (9B) and the damping force of the rear suspension (30) in the expansion direction, and
the suspension controller (63) is configured to control the damping force of the rear suspension (30) in the expansion direction, based on the map.

8. The straddled vehicle (1) according to any one of claims 1 to 7,
wherein
the suspension controller (63) is configured to, after actuation of the front wheel brake (8B) and/or the rear wheel brake (9B) is started by the brake controller (62), cause the spring reaction force of the front suspension (20) to increase and/or the spring reaction force of the rear suspension (30) to reduce as the braking force of the front wheel brake (8B) and/or the rear wheel brake (9B) increases.
